# EUROPEAN PATENT APPLICATION

(11) **EP 4 353 073 A1**
(43) Date of publication of application: **17.04.2024**
(21) Application number: 22201049.8
(22) Date of filing: 12.10.2022
(51) Int. Cl.: A01D 75/18, A01D 41/00, G01J 5/48, H04N 23/23

(54) **FIRE RISK DETECTION SYSTEM FOR AN AGRICULTURAL HARVESTER**

(71) Applicant: CNH Industrial Belgium N.V., 8210 Zedelgem (BE)
(72) Inventor: Missotten, Bart M.A., 3020 Herent (BE); Jongmans, Dré W.J., 4791AG Klundert (NL); Lode A., Demonie, 8840 Staden (BE)
(74) Representative: CNH Industrial IP Department

(57) **Abstract**

The system comprises at least one thermal imaging camera (5) mounted or positionable in a location that enables the camera to capture a thermal image of at least part of one lateral side of the harvester (1) when the harvester is operational in a field. The camera may for example be mounted on a movable component or subsystem of the harvester, such as the unloading tube (12) of a combine harvester (1) according to an embodiment of the invention. When the unloading tube is in the unloading position, the camera (5) is enabled to capture an image of the unloading side of the harvester. The system further includes a processing unit (6) and a control unit (7), configured to process and analyse captured thermal images, and compare temperature-related parameters derived from said images to a threshold. Such parameters include the maximum and/or average temperature in a number of areas identified in the images and/or in predefined critical areas, or the change of said average and/or maximum temperature, or the change in the shape of identified temperature-related areas. The control unit (7) is configured to execute one or more fire mitigation actions when one or more thresholds are exceeded. Said actions may include the activation of an auditive or visual warning signal or the activation of a fire extinguishing system.

## Description

### Field of the Invention

The present invention is related to self-propelled agricultural harvesters such as combine harvesters, forage harvesters or sugar cane harvesters. The invention is in particular related to the mitigation of a fire risk associated with such harvesters.

### State of the art.

Agricultural harvesters are self-propelled machines designed for cutting and processing crops from a field, while advancing through the field along a harvesting track. In many cases, a tractor drives alongside the harvester, towing a collecting trailer into which processed crop material is loaded through an unloading apparatus of the harvester, for example a pivotable unloading tube or elevator.

A number of parts of the harvester are likely to reach high temperatures, to the extent that a risk of fire becomes realistic, especially when the harvester is working in dry and hot conditions. An internal combustion engine is usually the main power source of the harvester, and parts of the engine can be the source of fire risk situations. For example, the engine of many modern day combine harvesters is located in a rear portion of the machine, more or less above the rear wheels or tracks of the harvester, and oriented transversally with respect to the longitudinal direction of the harvester. In this case, the engine fan generates a flow of hot air from one side of the harvester to the opposite side, where the flow of air is deflected between the engine and the outer shielding of the harvester. On this opposite side, chaff may become trapped behind the outer shielding of the harvester, and begin to smoulder or catch fire there and/or fall onto the rear wheels or tracks, causing a realistic fire hazard to the machine itself and to the field.

Current fire risk mitigation systems are usually employing temperature sensors mounted at particular locations inside the harvester's main body. While such systems are useful for detecting many potentially hazardous situations, they do not enable the monitoring of risks occurring outside said particular sensor locations. For example, the fire risk area as a consequence of engine-related air flow described in the previous paragraph is rather large and the exact location of burning or smouldering chaff may vary within said larger area. Detecting such a risk using temperature sensors mounted close to the risk area would either be unreliable due to an insufficient number of sensors, or too complex and expensive due to an overly large number of sensors.

### Summary of the invention

The invention is related to a fire risk detection system and method as described in the appended claims. The system of the invention comprises at least one thermal imaging camera mounted or positionable in a location that enables the camera to capture a thermal image of at least part of one lateral side of the harvester when the harvester is operational in a field. The camera may for example be mounted on a movable component or subsystem of the harvester, such as the unloading tube of a combine harvester according to an embodiment of the invention. When the unloading tube is in the unloading position, the camera is enabled to capture an image of the unloading side of the harvester. The system further includes a processing unit and a control unit, configured to process and analyse captured thermal images, and compare temperature-related parameters derived from said images to a threshold. Such parameters include the maximum and/or average temperature in a number of areas identified in the images and/or in predefined critical areas, or the change of said average and/or maximum temperature, or the change in the shape of identified temperature-related areas. The control unit is configured to execute one or more fire mitigation actions when one or more thresholds are exceeded. Said actions may include the activation of an auditive or visual warning signal or the activation of a fire extinguishing system.

### Brief description of the figures

Figure 1 is a top view of an operational combine harvester advancing in a field together with a tractor/trailer combination, wherein the thermal imaging camera of a fire risk detection system according to an embodiment of the invention is mounted on the unloading tube of the harvester.
Figure 2 is a top view of the same harvester as shown in Figure 1, but with the unloading tube in the non-unloading position.
Figure 3 is a rear view of a configuration similar to the one shown in Figure 1.
Figure 4 is a detail of a critical area on the unloading side of the harvester of Figure 4.
Figure 5 is a top view of an operational combine harvester advancing in a field together with a tractor/trailer combination, wherein the thermal imaging camera of a fire risk detection system according to an embodiment of the invention is mounted on the tractor.

### Detailed description of preferred embodiments of the invention

Preferred embodiments will now be described with reference to the drawings. The detailed description is not limiting the scope of the invention, which is defined only by the appended claims.

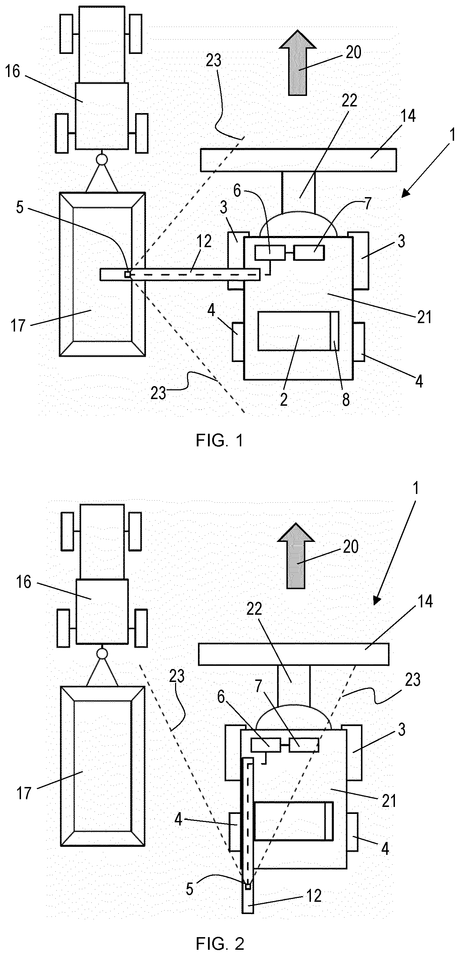

Figures 1 to 4 illustrate a fire risk detection system according to a first embodiment of the invention, wherein the system is associated to a combine harvester 1. In the present context, the term 'system' refers to a plurality of cooperating components which together are configured to detect a fire risk. The system is associated to a harvester and in several embodiments, all the components of the system are mounted on the harvester. However according to other embodiments, some components are mounted on the harvester while others are located outside the harvester. An example of the former case (all components on the harvester) is illustrated first, with reference to Figures 1 to 4.

As seen in Figure 1, the harvester 1 is moving in a forward direction 20 along a straight harvesting track. The harvester comprises a main body 21 supported by front wheels 3 and rear wheels 4. Instead of wheels, tracks may be provided at the front and/or the back side. Other types of harvesters to which the system of the invention is applicable, such as a sugar cane harvester, may be supported only by a pair of longer tracks, one on each side.

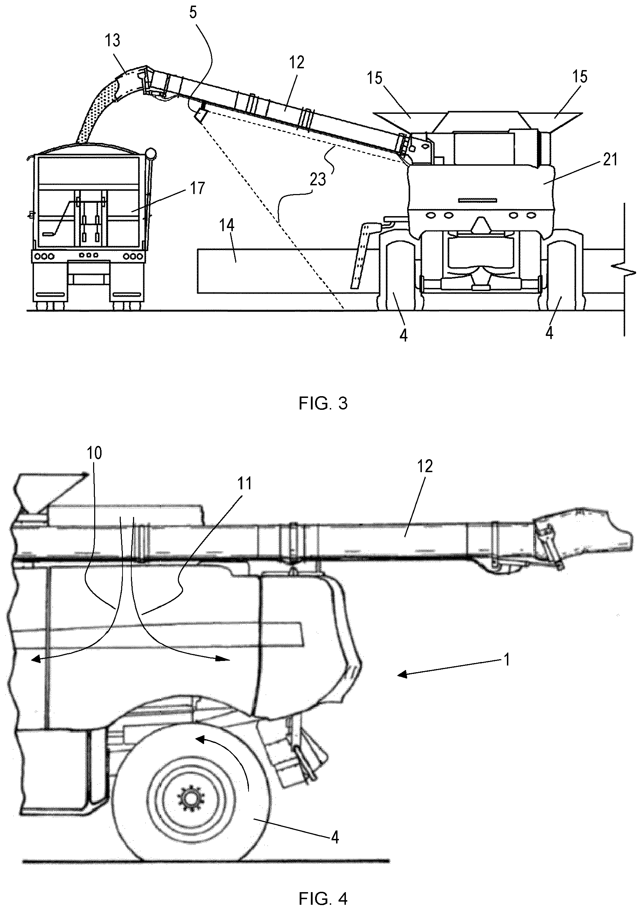

A feeder 22 is coupled to the main body 21 at the front side, and a header 14 is coupled to the feeder 22. Crops are cut from the field by knives (not represented) mounted at the front of the header 14 and gathered into the feeder 22 by an auger or draper belts (not represented) included in the header 14. In the main body 21, the crops are processed by a configuration including threshing rotors and sieves which are well-known and therefore not represented in the drawing. Fully processed crops such as grains are collected at the end of the various processing stages and unloaded from the harvester through an unloading tube 12. The tube is pivotable between an unloading position shown in Figure 1 and non-unloading position shown in Figure 2. As illustrated also in Figure 3, crops may be ejected from the mouth 13 of the unloading tube 12 when the latter is in the unloading position. A collecting trailer 17 pulled by a tractor 16 is advancing adjacent to the harvester. The speed of the tractor 16 matches the speed of the harvester 1, so that the ejected crops are falling into the trailer 17. During a harvesting run, the unloading tube 12 is usually moved from the unloading position to the non-unloading position when the trailer 17 is full. When another trailer arrives, the tube 12 is again pivoted into the unloading position.

In accordance with the first embodiment illustrated in Figures 1 to 4, the fire risk detection system includes a thermal imaging camera 5 mounted on the underside of the unloading tube 12, in the vicinity of the mouth 13 of the tube 12. In general, the camera 5 is preferably mounted closer to the mouth 13 than to the base of the tube 12. Functionally, the camera 5 is mounted so that its field of view includes at least part of the left-hand side of the harvester 1 when the tube 12 is in the unloading position. In Figure 1, said field of view is illustrated as the area between the dotted lines 23. It is seen that in the case shown, the entire left-hand side of the harvester's main body 21 effectively falls within the field of view. In this particular case of the combine harvester illustrated in the drawings, the unloading tube 12 is located on the left hand side of the harvester, hence it is only the left-hand side that can be viewed by the camera 5. On other harvester types, it could be the right-hand side that is visible or the tube could pivot both to the left or to the right, so one or the other side can be monitored.

From its position on the extended unloading tube 12 (i.e. in the unloading position), the camera 5 is configured to capture a thermal image of the visible portions of the left-hand side of the operational harvester 1. Preferably, multiple images are captured at regular intervals. Each image is then processed by a processing unit 6 coupled to the camera 5 for example by a wire connection. The processing unit 6 is coupled to a control unit 7 configured to initiate one or more of several possible fire risk mitigation measures which will be described in more detail further in this text.

The processing unit 6 and the control unit 7 are shown as parts of the harvester 1, but could also be realized as standalone units located outside the harvester and for example be connected to the camera 5 and to the harvester by wireless connections. The processing unit 6 can be realized as a computer comprising a processor programmed to perform image processing techniques on the thermal images captured by the camera. The control unit may be PLC or similar electronic component capable of translating incoming signals which are a function of the captured thermal image into outgoing control signals. The physical realization of these units is therefore known as such. On the other hand, the parameters derived from the images, the relation between said parameters and the outgoing control signals and the various types of controls implemented in the system are characteristic features of the invention, as described hereafter in more detail for the embodiment shown in Figure 1.

A thermal imaging camera is known as such, and a known camera type can be used in the system of the invention. Preferably an infra-red camera is used. A thermal image captured by a thermal imaging camera is an image that comprises temperature-defined areas, usually represented by different colours, with red indicating hot areas, orange and yellow indicating medium range temperature areas and for example green or blue indicating colder areas. The scale that defines which temperatures represent 'hot' and 'cold' can depend on the object that is being observed. In a view of the left hand side of the combine harvester 1 in Figure 1, hot areas appear in the vicinity of the power source of the combine, which is usually an internal combustion engine 2. In the embodiment shown, the engine 2 is mounted transversally with respect to the forward driving direction 20. The engine is closer to the rear of the harvester 1 than to the front, and placed in an area extending broadly above the rear wheels 4. A fan 8 attracts cooling air from the environment and blows it from right to left, across the engine parts which need cooling, such as the turbo charger or parts of the exhaust. The air is thereby heated and enters the space between the engine 2 and the left side panel of the harvester's bodywork at a high temperature. In most harvesters, this hot air flow is deflected by the interior shape of the panel or by other deflecting objects and split into a forward and a rearward air flow 10 and 11, illustrated in Figure 4. Possibly the air could be deflected only to the rear or to the front, or additional deflection paths can be provided, for example a deflection path towards the top of the harvester.

As stated in the introduction, these hot air flows may be the source of smouldering or burning chaff building up in the space between the engine 2 and the side panel, and/or falling onto the rear wheels 4. In the system of the invention, such smouldering or burning chaff appears in the thermal image as hot areas and are identified as such by the processing unit 6.

The particular context of the engine cooling air being blown from one side of the harvester to the other side and the resulting fire risk area on said other side is not limited to combine harvester, but it is relevant for any harvester equipped with an internal combustion engine mounted in such a way that the described air flow is taking place.

The processing unit 6 is configured to analyse the thermal image and to compare parameters derived therefrom to a predefined threshold. These parameters may include one or more of the following :
- the average and/or maximum temperature in one or more areas of the captured thermal image,
- a change in the average and/or maximum temperature in one or more areas of the captured image, relative to a previously captured thermal image,
- a change of the shape of one or more areas in the thermal image, relative to the shape of said areas in a previously captured thermal image and/or relative to a reference shape (for example determined during a harvesting run under strictly defined conditions).
The 'one or more areas' can include any temperature-defined area detected on the basis of each captured image. In other words : an image is captured, the processor analyses the image and identifies any area wherein one or more of the above-identified parameters exceeds the threshold. According to preferred embodiments however, the 'one or more areas' comprise - in addition to or instead of said identified areas derived from the image itself - predefined critical areas of the thermal image, i.e. areas which are known to represent a fire risk when either of the above-described parameters crosses the respective threshold. Such critical areas can be pre-defined by running the harvester in a reference condition, for example at maximum power during a given harvesting stretch. Critical areas can also be identified or updated during normal harvesting runs. Examples of a critical area may include the area corresponding to the engine or parts thereof such as the exhaust or the turbocharger, or areas where chaff has been known to build up during said reference run or during previous harvesting runs. Another critical area is the rear wheel 4 on the side observed by the camera 5, especially the upper surface of the wheel and the area in front of the wheel. When burning or smouldering chaff falls onto the wheel 4, it is likely to be detected either on top of the wheel, or in front of the wheel when it has fallen onto the ground due to the wheel's forward rotation.

The area in front of the wheel 4 is an example of a portion of the field included in the thermal image. According to embodiments of the invention, the camera's field of view may include additional portions of the field, for example a limited field area behind the harvester.

In order to adequately identify the temperatures and shapes in the thermal image, it is preferred that the side panel of the harvester's bodywork is made of synthetic material, which allows the infrared rays of the heated area to pass through the material so that it can be captured directly by the camera 5. When a metal shielding is used, the metal itself may be heated by burning chaff or other heat sources, which is also detectable by the camera 5.

The processing unit 6 applies known image processing and analysis techniques for deriving the above-described parameters from the image. The shape of the one or more areas can be determined by standard shape recognition algorithms. Comparison to the thresholds can be done by standard computation techniques.

The 'respective thresholds' can be determined also during a reference condition of the harvester and/or updated during normal harvesting runs. According to preferred embodiments, the threshold for each of the above-identified parameters depends on one or more of the following conditions :
∘ the ambient temperature and/or humidity
∘ the engine load.
∘ the type of crop
∘ the crop humidity
∘ the position of the sun relative to the harvesting tracks. When the sunlight falls on the side of the harvester that is being monitored, temperatures are likely to be significantly higher than when the monitored side in the shadow. The thresholds can be adapted accordingly.
∘ the wind force and direction relative to the harvesting tracks. Above a given wind force, the wind may have a cooling effect on the side that is being monitored, depending on how the wind direction relates to the harvesting track. The thresholds can be adapted accordingly.
These parameters are either measured by standard sensors which can be coupled to the processing unit 6, or they can be entered manually (for example the crop type) by the operator at the start of a harvesting run. Such manual entry may take place using a standard interface of the harvester, for example a touch screen in the operator's cabin, and entered into a memory module of the harvester's standard electronic control system. The processing unit 6 of the system of the invention may be coupled to or integrated in said control system, so that the entered parameter can be read by the processing unit 6, which subsequently applies the correct threshold as a function of said entered parameter.

The processing unit 6 verifies whether one or more of the above-identified parameters (average and/or maximum temperature, change of average and/or maximum temperature, change of shape of one or more higher temperature areas) derived from a captured image exceeds its respective thresholds. When this is the case, a signal is sent by the processing unit 6 to the control unit 7 which then activates one or more of the following risk mitigation measures :
- give a visual and/or auditive warning signal to an operator of the harvester. In addition, a warning signal could be transmitted outside the harvester, through a wireless connection, for example for alerting a fire service or supervisor
- modify a setting of the harvester to reduce the risk for fire and/or slow down or contain a fire. For example, the harvester may be automatically slowed down and/or its crop processing power may be lowered.
- activate a fire extinguishing system in the harvester. This may be any system already known in the art, comprising sprinklers or the like.
A visual warning signal may be given on a standard interactive screen in the operator's cabin. According to embodiments of the invention, the warning is accompanied by a visual indication of the area where a parameter has exceeded its threshold. This may for example be done by providing an image of the harvester on the screen and colouring the risk area on the image.

According to an embodiment, the thermal imaging camera 5 includes an additional camera for capturing a visual image that corresponds to the thermal image. The visual image can be overlayed onto the thermal image and represented on a screen in the operator's cabin, thereby facilitating the visualisation of the risk area. Alternatively, visible light details can be added to thermal images, which is also called multi-spectral dynamic imaging. An example is the FLIR MSX^{®} technology by the company FLIR whereby edge and outline detail is extracted from the visual image and embedded onto the thermal readings. Unlike image overlaying or fusing, MSX does not dilute the thermal image or decrease thermal transparency.

Reference is made to Figure 2, which illustrates the unloading tube in the non-unloading position. In the particular case of the combine harvester, the tube is usually mounted to one side of the harvester's main body 21, so that in the non-unloading position, the tube is more or less aligned with the left hand side of said main body. During a normal harvesting run, the tube will normally be pivoted into this position every time the trailer is full, and possibly also when the harvester needs to manoeuvre in the field. When the harvester is equipped with the fire risk detection system of the invention, additional fire risks may be detected when the tube 12 and thereby the camera 5 is in said non-unloading position. As illustrated in Figure 2, the field of view between the lines 23 is able to capture an image of one side of the header 14, enabling to detect potential fire risks associated with the header, for example in relation to the knife mechanism. The field of view in the non-unloading position also includes the left-hand side rear wheel 4, so that monitoring of this critical area remains available when the tube is in this position.

The thermal imaging camera 5 may however be placed on other parts of the harvester, or the fire risk detection system may include more than one thermal imaging camera. Examples of suitable other locations of the camera include : on one of the lateral flaps 15 of the grain tank cover (see Figure 3). These flaps 15 can be opened and closed and they are mostly open when the harvester is operational in the field. From a position close to the outer end of one of the opened flaps 15, at least part of the side of the harvester underneath the flap can be observed by a thermal imaging camera mounted in said position.

Another possible location for a thermal imaging camera of the fire risk detection system is on one or both of the rear-view mirrors (not shown) of a harvester. These rear-view mirrors may be movable between a position wherein the mirror is placed further apart from the operator's cabin (wider position), and a position wherein the mirror is closer to the cabin. Especially from the wider position, a view of at least part of the side of the harvester where the mirror is located, is obtainable with a thermal imaging camera mounted for example on a support arm of the rear-view mirror, in close proximity to the mirror itself, for example underneath the mirror.

The unloading tube 12, the flaps 15 and a movable rear-view mirror are examples of movable components or subsystems onto which the thermal imaging camera 5 can be mounted, with the components or subsystems being movable between a position that is closer to the main body 21 of the harvester and a position wherein at least a portion of the component or subsystem is further removed from the main body. Depending on the type of harvester onto which the system is applied, the camera 5 could be mounted also on a component that has a fixed position relative to the main body of the harvester. However, when placed on a movable component or subsystem, the camera is likely to be able to obtain a better or more complete image of the harvester's side.

It is also possible to capture thermal images while the movable component or subsystem is moving. According to embodiments of the invention, the movement is detected also by the processing unit 6, so that the changing image can be related to the changing position of the camera. For example, in the embodiment of Figures 1 to 4, images can be captured while the unloading tube 12 is pivoted outwards or inwards. The pivotal position of the tube 12 can be derived from the signal produced by a potentiometer that is part of the combine's standard equipment. When this signal is supplied to the processing unit 6, and the processing unit is configured to process the signal appropriately, the movement of the tube 12 can be taken into account and the fire risk detection can be continued during movement of the tube and the camera. Another way of taking the movement into account can be based on a visual image taken by the thermal imaging camera when the latter is equipped also with a normal camera. The harvester may be provided with one or more markers and the processing unit 6 may be configured to recognize the position of the markers in the consecutive images captured during the movement of the camera 5. The processing unit 6 is programmed to process the consecutive images taking into account the marker position which is related to a camera position according to a predefined relationship.

The invention is applicable to multiple harvester types, including a combine harvester as illustrated in the drawings, as well as a forage harvester and a sugar cane harvester. A forage harvester usually also includes an unloading tube similar to the unloading tube of the combine, except that the tube in a forage harvester is often pivotable both to the left hand side and to the right hand side. A camera mounted on the underside of the unloading tube in a similar position as illustrated for the combine can therefore monitor both sides of a forage harvester, depending on the pivoted position of the unloading tube.

A sugar cane harvester also comprises a pivotable unloading apparatus that is similar to an unloading tube. The apparatus is however usually referred to as an unloading elevator and the inner mechanism of the apparatus is different from an unloading tube of a combine. The unloading elevator however enables the same functionality of a risk detection system according to the invention, when a thermal imaging camera is mounted in the vicinity of the mouth of the unloading elevator. Like the forage harvester, the unloading elevator of a sugar cane harvester is usually able to pivot to either side of the harvester's main body. Critical areas may be different depending on the type of harvester to which the system is applied, but the manner in which temperature-related parameters are derived from the captured images and translated into fire risk mitigation actions is the same regardless of the type of harvester.

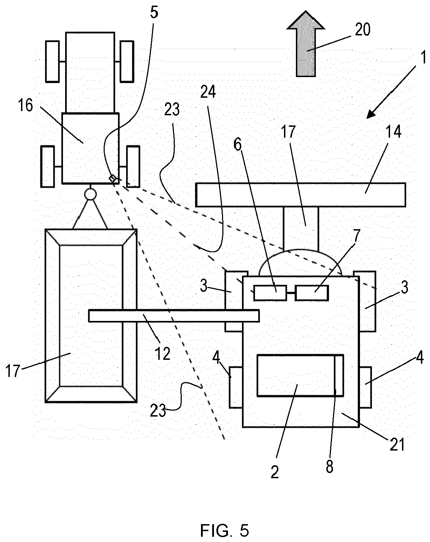

As stated, the invention is not limited to a fire risk detection system of which all the components are mounted on the harvester. Figure 5 illustrates an embodiment wherein the thermal imaging camera 5 is mounted on the tractor 16 that is pulling the crop collecting trailer 17 alongside the harvester 1. As illustrated, the field of view between the lines 23 comprises the full lateral side of the harvester's main body 21. Hence, the image processing and control signal generation can be performed in the same way as described above on the basis of images captured by the camera 5 mounted on the tractor. Alternatively, the camera or an additional camera could be mounted on the trailer 17. The communication between the camera 5 and the processing unit 6 now takes place by a wireless transmission, symbolized by the line 24 in Figure 5.

## Claims

1. A fire risk detection system for a self-propelled agricultural harvester (1) having a front side, a rear side and two lateral sides, the harvester comprising a set of wheels (3,4) or tracks and a main body (21) that is supported by said wheels or tracks and that comprises a power source (2), the system comprising :
- at least one thermal imaging camera (5) that is :
∘ mounted or positionable in a position so that a field of view of the camera comprises at least a portion of a lateral side of the harvester during operation of the harvester in a field and
∘ configured to capture a thermal image of at least said portion of the lateral side,
- a processing unit (6) coupled to the thermal imaging camera (5) and configured to execute one or more of the following actions :
∘ determine if the average and/or maximum temperature in one or more areas in the thermal image exceeds a threshold,
∘ determine if a change in the average and/or maximum temperature in one or more areas in the thermal image compared to a previously captured thermal image exceeds a threshold,
∘ determine whether a change in the shape of one or more areas in the thermal image has taken place compared to a previously captured thermal image and/or to a reference shape, and whether said change exceeds a threshold,
- a control unit (7) coupled to the processing unit (6), and configured to execute one or more of the following actions when one or more thresholds are exceeded :
∘ give a visual and/or auditive warning signal to an operator of the agricultural harvester (1),
∘ modify a setting of the agricultural harvester to reduce the risk for fire and/or slow down or contain a fire,
∘ activate a fire extinguishing system in the agricultural harvester (1).

2. The fire risk detection system according to claim 1, wherein said one or more areas comprise one or more pre-defined critical areas which may be determined on the basis of :
∘ the temperatures determined in the thermal image made with the agricultural harvester in a reference condition,
∘ position and temperature of components of the agricultural harvester in an operating condition.

3. The fire risk detection system according to claim 1 or 2, wherein the one or more thresholds are depending on one or more of the following:
∘ the ambient temperature and/or humidity
∘ the engine load
∘ the type of crop
∘ the crop humidity
∘ the position of the sun
∘ the wind direction.

4. The fire risk detection system according to any one of the preceding claims, wherein the thermal imaging camera (5) comprises an additional camera with the same field of view as the thermal camera and configured to capture a visual image.

5. The fire risk detection system according to any one of the preceding claims, wherein :
- the power source is a combustion engine (2),
- the harvester comprises a fan (8) for producing cooling air for cooling the engine (2),
- the fan (8) is configured to blow a flow of cooling air from one side of the harvester to the other side of the harvester, wherein said air is heated through contact with the engine and thereafter deflected along one or more paths (10,11) running at least towards the front and/or the rear of the harvester,
- the thermal imaging camera (5) is positioned or positionable so that the field of view comprises at least a part of said other side of the harvester, the field of view including at least one of :
∘ components of and/or part of the engine (2),
∘ at least a portion of said one or more paths (10,11).

6. The fire risk detection system according to claim 5, wherein the harvester (1) comprises two front wheels (3) or tracks and two rear wheels (4) or tracks, and wherein the engine (2) is located at least partially above the rear wheels (4) or tracks, and wherein said field of view further includes the rear wheel (4) or track on the side of the harvester that is being viewed by the camera (5).

7. The fire risk detection system according to any one of the preceding claims, wherein for at least one position of the camera (5), the thermal image includes at least a portion of the field.

8. The fire risk detection system according to any one of the preceding claims, comprising a plurality of said thermal imaging cameras (5).

9. The fire risk detection system according to any one of the preceding claims, wherein at least one thermal imaging camera (5) is mounted on the harvester (1).

10. The fire risk detection system according to claim 9, wherein the camera (5) is mounted on a component or subsystem of the harvester (1) that is movable relative to the main body (21) of the harvester.

11. The fire risk detection system according to claim 10, wherein the camera (5) is configured to capture multiple images while said movable component or subsystem is moving from one position to another.

12. The fire risk detection system according to claim 10 or 11, wherein the harvester (1) comprises a pivotable unloading apparatus (12) for ejecting processed crop materials from the harvester towards a collecting vehicle (17) adjacent to the harvester during said operation in the field, the unloading apparatus comprising an ejection mouth (13) through which crops are able to exit the unloading apparatus, wherein said apparatus is pivotable between a non-unloading position and an unloading position with the apparatus extending away from one lateral side of the harvester in the unloading position, said lateral side being hereafter called the unloading side, and wherein :
- the camera (5) is mounted on the unloading apparatus, ,
- the camera (5) is configured to capture an image of at least a portion of said unloading side of the harvester when the unloading apparatus (12) is in the unloading position.

13. The fire risk detection system according to claim 12, wherein the harvester is a combine harvester comprising two front wheels (3) or tracks and two rear wheels (4) or tracks, and wherein said unloading apparatus is a pivotable unloading tube (12), wherein said tube is mainly parallel to the longitudinal direction of the harvester when the tube is in the non-unloading position, and wherein the camera (5) is configured to capture a thermal image of part of a header (14) coupled to the harvester (1) at its front side, and at least part of the rear wheel or track (4) at the unloading side, when the tube (12) is in the non-unloading position.

14. The fire risk detection system according to claim 10 or 11, wherein the harvester (1) comprises a crop tank provided with lateral flaps (15) which are in an open position during said operation in the field, at least a top side of the lateral flaps extending away from the lateral sides of the harvester when the flaps are in said open position and wherein the camera (5) is mounted on one of said lateral flaps (15).

15. The fire risk detection system according to any one of claims 9 to 11, wherein the harvester (1) comprises fixed or movable laterally placed rear-view mirrors and wherein the camera (5) is mounted on one of said rear-view mirrors.

16. The fire risk detection system according to any one of claims 1 to 8, wherein the camera (5) is mounted on a towing vehicle (16) advancing adjacent the harvester (1) during said operation in the field or on a crop collecting trailer (17) towed by the towing vehicle (16).

17. An agricultural harvester comprising a fire risk detection system according to any of claims 9 to 15.

18. An agricultural harvester according to claim 17 whereby the agricultural harvester is a combine harvester, a forage harvester or a sugar cane harvester.

19. A method for detecting a fire risk or a fire associated with an agricultural harvester (1) operating in a field, using a fire risk detection system according to any one of the claims 1 to 16, the method comprising the steps of :
- capturing one or more thermal images of at least a portion of a lateral side of the harvester (1) while the harvester is operating in a field,
- deriving from each of said images at least one of the following parameters:
∘ the average and/or maximum temperature in one or more areas in the thermal image,
∘ a change in the average and/or maximum temperature in one or more areas in the thermal image compared to a previously captured thermal image,
∘ a change in the shape of one or more areas in the thermal image compared to a previously captured thermal image or to a reference shape,
- comparing said at least one parameter to a predefined threshold,
- when the parameter exceeds the threshold, activating one or more of the following actions :
∘ giving a visual and/or auditive warning signal to an operator of the agricultural harvester (1),
∘ modifying a setting of the agricultural harvester to reduce the risk for fire and/or slow down or contain a fire,
∘ activating a fire extinguishing system in the agricultural harvester.

20. The method according to claim 19, wherein the camera (5) is mounted on a movable component or subsystem of the harvester (1), and wherein multiple images are captured during a movement of said movable component or subsystem.
